# EUROPÄISCHE PATENTSCHRIFT

(11) **EP 3 550 667 B1**
(45) Veröffentlichungstag und Bekanntmachung des Hinweises auf die Patenterteilung: **28.09.2022**
(21) Anmeldenummer: 19164004.4
(22) Anmeldetag: 20.03.2019
(51) Int. Cl.: H01R 9/05, H01R 9/26, H01R 4/66, H01R 4/48, H01R 25/14

(54) **ANSCHLUSSVORRICHTUNG ZUM ANSCHLIESSEN EINES LEITERS EINES KABELS AN EINE TRAGSCHIENE ZU DEREN ELEKTRISCHEN VERBINDUNG MITEINANDER**
CONNECTION DEVICE FOR CONNECTING A CONDUCTOR OF A CABLE TO A SUPPORT RAIL FOR ELECTRICAL CONNECTION WITH EACH OTHER
DISPOSITIF DE RACCORDEMENT DESTINÉ AU RACCORDEMENT D'UNE CONDUITE D'UN CÂBLE À UN RAIL PORTEUR PERMETTANT LEUR RACCORDEMENT ÉLECTRIQUE

(30) Priorität: 03.04.2018 DE 102018107839
(43) Veröffentlichungstag der Anmeldung: 09.10.2019
(73) Patentinhaber: Phoenix Contact GmbH & Co. KG, 32825 Blomberg (DE)
(72) Erfinder: ANDRESEN, Jens, 32825 Blomberg (DE)
(74) Vertreter: Muth, Bruno

(56) Entgegenhaltungen:
- EP-A1- 2 675 017
- WO-A1-2019/096945
- DE-A1- 19 716 762
- DE-A1-102016 110 393
- DE-U1- 9 302 280

## Beschreibung

Die Erfindung betrifft eine Anschlussvorrichtung gemäß dem Oberbegriff des Anspruchs 1 zum Anschließen eines Leiters, insbesondere eines Schirmleiters, eines Kabels an eine Tragschiene zu deren elektrischen Verbindung miteinander, mit einem Anschlusskörper, der zur Anordnung an der Tragschiene Rastmittel aufweist, durch die der Anschlusskörper auf der Tragschiene aufrastet und in Raststellung wenigstens an einem ersten freien Ende wie auch an einem dem ersten freien Ende gegenüberliegenden zweiten freien Ende der Tragschiene gehalten ist und dabei den am Anschlusskörper angeordneten Leiter des Kabels elektrisch mit der Tragschiene verbindet, wobei der Anschlusskörper einen Aufnahmeraum aufweist, der derart eingerichtet und ausbildet ist, dass wenigstens ein in dem Aufnahmeraum aufgenommener unisolierter Leiterabschnitt des Leiters in Raststellung zwischen dem Anschlusskörper und der Tragschiene angeordnet ist, wobei der Anschlusskörper Kontaktierungsmittel aufweist, die derart eingerichtet und ausgebildet sind, dass die Kontaktierungsmittel beim Aufrasten des Anschlusskörpers auf die Tragschiene den im Aufnahmeraum angeordneten unisolierten Leiterabschnitt des Leiters mit einer Federkraft beaufschlagen und diesen damit gegen den Anschlusskörper und/oder die Tragschiene drücken. Des Weiteren umfasst die Erfindung auch eine Anschlussbaugruppe mit einer entsprechenden Anschlussvorrichtung.

Eine entsprechende Anschlussvorrichtung ist aus der DE 197 16 762 A1 bekannt. Die dort beschriebene Schirmanschlussklemme übergreift mit einem U-förmigen Spannbügel ein auf einer Sammelschiene mit seinem freigelegten Kabelschirm aufliegendes Kabel. Die Spannbügelenden sind jeweils mit zwei gegeneinander federnden Klemmschenkeln ausgebildet, deren Funktionen in Abhängigkeit von der jeweiligen Position eines Führungsdruckstücks gesteuert sind. Eine weitere entsprechende Anschlussvorrichtung ist aus der EP 2 675 017 A1 bekannt.

Weiter ist aus der DE 93 02 280 U1 eine Vorrichtung zum Anschließen eines mit einer Abschirmung versehenen Kabels an einem Bauteil, z.B. an einer Erdungsleiste, bekannt, wobei eine das Kabel mittels seiner Abschirmung gegen das Bauteil drückende, von zumindest einer Schraube betätigten Klemme vorgesehen ist. Die Klemmschraube greift mit ihrem Gewinde in ein Gegengewinde eines Zwischenelementes ein. Das Zwischenelement ist zu einem Halteelement verschiebbar, wobei das Halteelement am Bauteil angreift und sich daran während des Klemmens hält. Das Zwischenelement stützt sich an seiner vom Bauteil abgewandten Seite über eine Druckfederanordnung an dem Halteelement ab. Die Klemmschraube stützt sich in Klemmrichtung mit ihrem Schraubenschaft an einem Druckelement ab, das an der Seite der Abschirmung des Kabels angreift, die zur Anlageseite der Kabelabschirmung am Bauteil entgegengesetzt liegt.

Die DE 10 2016 110 393 A1 beschreibt eine Kontaktierungseinrichtung zum Kontaktieren eines Schirmleiters einer elektrischen Leitung mit einem Erdungsabschnitt, welche ein Gehäuse umfasst, das einen Aufnahmeraum einfasst, in den eine elektrische Leitung mit einem Schirmleiter einsetzbar ist, wobei das Gehäuse derart an einen Erdungsabschnitt ansetzbar ist, dass sich der Erdungsabschnitt in den Aufnahmeraum erstreckt. Zusätzlich ist ein um eine Schwenkachse verschwenkbar an dem Gehäuse angeordnetes Federelement vorgesehen, das aus einer Öffnungsstellung in eine Klemmstellung verschwenkbar ist, um in der Klemmstellung einen Schirmleiter einer in den Aufnahmeraum eingesetzten elektrischen Leitung mit einem Erdungsabschnitt, an den das Gehäuse angesetzt ist, zu kontaktieren.

Weiter ist aus der WO 2019/096945 A1 ein Elektronikgehäuse bekannt, das einen Gehäusekörper und eine Leiterplatte aufweist, wobei der Gehäusekörper eine Anschlussvorrichtung zum Anschluss eines Leiters an die Leiterplatte aufweist. Die Anschlussvorrichtung weist einen Aufnahmekörper auf, in dem ein Aufnahmeraum mit einer Öffnung für den Leiter gebildet ist, wobei ein Deckel für die Öffnung vorgesehen ist, der bewegbar ist zwischen einer Offenstellung, in der der Deckel die Öffnung für ein Einfügen eines unisolierten Leiterabschnitts des Leiters in den Aufnahmeraum öffnet, und einer Schließstellung, in der der Deckel die Öffnung wenigstens abschnittsweise verschließt.

Anschlussvorrichtungen der gattungsgemäßen Art existieren in unterschiedlichen Ausprägungen und sind für unterschiedliche Anwendungsfälle konzipiert. So sind gattungsgemäße Anschlussvorrichtungen bekannt, die dazu eingerichtet und ausgebildet sind, einen Leiter bzw. Schirmleiter eines Kabels mit einer balkenförmigen Sammelschiene elektrisch zu verbinden. Dazu wird der Leiter beispielsweise gegen einen elektrisch leitenden Abschnitt der Sammelschiene gedrückt, um eine elektrische Verbindung zwischen Leiter und Tragschiene herzustellen. Dazu sind Anschlussvorrichtungen dieser Art beispielsweise bekannt aus EP 2 541 686 A1 und EP 2 541 685 A1, die für vorgenannte Verwendung entsprechend eingerichtet und ausgebildet sind.

Zum Anschluss eines Leiters an eine Tragschiene sind Anschlussvorrichtungen beispielsweise aus JP2016091681 bekannt, bei denen vorgesehen ist, die Leiter eines jeweiligen Kabels mit Aderendhülsen zu versehen, um diese an den Anschlusskörper anschließen zu können. Damit sind derartige Anschlussvorrichtungen vergleichsweise aufwändig in der Handhabung und von einer besonderen Ausgestaltung der Kabelenden abhängig.

Des Weiteren sind Anschlussvorrichtungen der betreffenden Art bekannt aus EP 2 983 245 A1, DE 20 003 081 U1 wie auch DE 10 2009 057 514 B3. Daraus gehen Anschlussvorrichtungen zum Anschließen eines Leiters eines Kabels, insbesondere eines Schirmleiters, an eine Tragschiene zu deren elektrischen Verbindung miteinander hervor. Diese sind dazu mit einem Anschlusskörper ausgestattet, der zur Anordnung an der Tragschiene Rastmittel aufweist, durch die der Anschlusskörper auf der Tragschiene aufrastet und in Raststellung wenigstens an einem ersten freien Ende wie auch an einem dem ersten freien Ende gegenüberliegenden zweiten freien Ende der Tragschiene gehalten ist. Dabei verbindet der in Raststellung befindliche Anschlusskörper den daran angeordneten Leiter des Kabels elektrisch mit der Tragschiene.

Vorgenannte Tragschienen sind allgemein bekannt und dienen dazu, elektrische wie auch elektronische Komponenten beispielsweise in Verteilerkästen, Schaltschränken, Anschlusskästen und dergleichen anbringen zu können. Dazu werden die elektrischen Komponenten häufig zur Bildung eines Moduls in Elektrogehäusen eingehaust, über die sie an einer Tragschiene angebracht werden.

Die bekannten Anschlussvorrichtungen der betreffenden Art erfordern zur Sicherstellung einer elektrischen Verbindung zwischen Leiter und Tragschiene verschiedene Einzelteile, wodurch sie einen erhöhten Realisierungs- wie auch Handhabungsaufwand aufweisen.

Der Erfindung liegt die Aufgabe zugrunde, Anschlussvorrichtungen anzugeben, die ein sicheres und gleichfalls einfaches elektrisches Verbinden eines Leiters, insbesondere eines Schirmleiters, mit einer Tragschiene ermöglichen.

Die Anschlussvorrichtung gemäß der Erfindung zeichnet sich dadurch aus, dass die Rastmittel wenigstens zwei zueinander beabstandete Rasthaken aufweisen, die derart eingerichtet, ausgebildet und an dem Anschlusskörper angeordnet sind, dass ein erster Rasthaken mit dem ersten freien Ende der Tragschiene und ein zweiter Rasthaken mit dem zweiten freien Ende der Tragschiene für ein Aufrasten des Anschlusskörpers auf die Tragschiene zusammenwirken und dass die Kontaktierungsmittel wenigstens eine Kontaktfederzunge aufweisen, die mit dem Anschlusskörper elektrisch leitend verbunden und derart ausgebildet und an diesem angeordnet ist, dass die Kontaktfederzunge in Raststellung des Anschlusskörpers den unisolierten Leiterabschnitt federkraftbelastend kontaktiert, wobei der Anschlusskörper einstückig gebildet ist und wobei die Kontaktfederzunge an dem Anschlusskörper einstückig angeformt ist.

Die Erfindung wendet sich zur Lösung der Aufgabe von dem Gedanken ab, die bekannten Anschlussvorrichtungen derart mit einer Vielzahl von Einzelteilen zu ergänzen, die jeweils auf eine Funktion zur Erleichterung der Handhabung spezialisiert sind, um beispielsweise damit ein sicheres elektrisches Verbinden zwischen Leiter und Tragschiene zu erleichtern.

Vielmehr verfolgt die Erfindung den Ansatz, die Anordnung des Kabels bzw. Leiters an einer Anschlussvorrichtung unter dem Verzicht vorzunehmen, Einzelteile zu spezialisieren und damit ihre notwendige Anzahl zu erhöhen. Dazu wendet sich von einer Spezialisierung der Einzelteile ab.

Ferner vermeidet die Erfindung auch die Anpassung des betreffenden Kabels, beispielsweise durch Verwendung von sogenannten Aderendhülsen bzw. Kabelabschüssen oder Adaptern.

Die Erfindung sieht zunächst vor, dass der Anschlusskörper einen Aufnahmeraum aufweist, der derart eingerichtet und ausgebildet ist, dass wenigstens ein im Aufnahmeraum aufgenommener unisolierter Leiterabschnitt des Leiters in Raststellung zwischen dem Anschlusskörper und der Tragschiene angeordnet ist.

Dabei lehnt sich die Erfindung nicht an bestehende Lösungen für einen Anschluss an eine Tragschiene an, sondern löst die ihr gestellte Aufgabe durch eine Umgestaltung der Anordnung des Kabels/Leiters an den erfindungsgemäß gebildeten Anschlusskörper und damit an die Tragschiene, an den sie durch die Erfindung zudem näher anordnenbar ist, wodurch sich Vorteile in der elektrischen Verbindung erschließen.

Im Rahmen der Erfindung wird der unisolierte Leiterabschnitt des Leiters auch verkürzt als unisolierter Leiterabschnitt bezeichnet. Zudem bezeichnet die Raststellung verkürzend eine Anordnung des Anschlusskörpers, in der dieser an der Tragschiene angeordnet und zum Halten daran mit dieser durch die Rastmittel auf die Tragschiene aufrastet.

Im Rahmen der Erfindung bezeichnen die Begriffe Leiter einen elektrischen Leiter, der elektrische Ströme bzw. Signale leitet. Ferner umfasst im Sinne der Erfindung der Begriff Leiter auch einen Schirmleiter so dass die Aussagen zu einem Leiter ebenfalls für dessen Ausführung als Schirmleiter gelten.

Des Weiteren ist im Rahmen der Erfindung unter einem Kabel zunächst ein mit einer elektrisch isolierenden Ummantelung versehener einadriger Leiter oder ein mehradriger Verbund von Leitern zu verstehen. Dabei kann die Ummantelung auch mehrere Mantellagen umfassen, die den wenigstens einen Leiter umgeben. Die Ummantelung wird im Weiteren auch als elektrische Isolierung zw. Isolierung bezeichnet.

Um einen ummantelten Leiter des Kabels elektrisch kontaktieren zu können, ist die Isolierung wenigstens an der betreffenden Kontaktierungsstelle des Kabels zu entfernen, um daraufhin den Leiter über seinen unisolierten Leiterabschnitt kontaktieren zu können.

Im Rahmen der Erfindung kann das Kabel auch durch den Leiter selbst gebildet sein, wobei das Kabel wiederum auf eine Ummantelung/Isolierung des Leiters verzichtet. Vorzugsweise weist ein Kabel im Rahmen der Erfindung wenigstens einen elektrischen Leiter auf, der wenigstens von einem Schirmgeflecht umgeben ist, das wiederum eine Abschirmung des betreffenden Leiters ermöglicht. Erfindungsgemäß ist der Schirmleiter daher insbesondere durch ein Schirmgeflecht gebildet.

Der Leiter dient im Rahmen der Erfindung vorzugsweise als Schutzleiter bzw. zum Potenzialausgleich der mit ihm elektrisch verbundenen Körper, wie es elektrische/elektronische Komponenten bzw. Module sind, wie beispielsweise elektrische/elektronische Geräte, Kontakte, Träger. Demgemäß können auch mehrere Leiter des Kabels diesem Zweck dienen. Im Rahmen der Erfindung kann ein Leiter durch einen elektrisch leitenden Draht/eine elektrisch leitende Litze bzw. Ader wie auch eine Mehrzahl von elektrisch leitenden Drähten bzw. Litzen oder Adern gebildet sein.

Die Erfindung führt zu dem Vorteil, dass ein erfindungsgemäßer Anschlusskörper neben einer einfachen Handhabung auch eine kostengünstige Herstellung erlaubt.

Des Weiteren ist erfindungsgemäß lediglich eine geringe Anzahl von Bauteilen notwendig, um ein sicheres elektrisches Verbinden zwischen elektrischem Leiter des Kabels und der Tragschiene zu erreichen. Dazu verzichtet die Erfindung beispielsweise auf zusätzliche Einzelteile bzw. Betätigungshilfen, um das Kabel für eine elektrische Verbindung mit der Tragschiene zu kontaktieren bzw. zu halten. Dadurch sind auch Fehlerquellen in der Handhabung einer erfindungsgemäßen Anschlussvorrichtung verringert, wodurch auch eine hohe Standzeit begünstigt ist.

Ferner führt die Erfindung zu dem Vorteil, dass der notwendige Raumbedarf für eine erfindungsgemäße Anschlussvorrichtung klein gehalten werden kann.

Die Erfindung ermöglich ebenfalls den Vorteil, dass der elektrische Weg zwischen dem elektrischen Leiter und der Tragschiene gering gehalten werden kann, indem sie beispielsweise und insbesondere den in dem Aufnahmeraum aufgenommenen unisolierten Leiterabschnitt direkt mit der Tragschiene in Anlage bringt und dadurch mit dieser elektrisch verbindet bzw. verbindbar macht.

Überdies führt die Erfindung zu dem Vorteil, dass die Rastmittel nicht nur den Anschlusskörper, sondern auch das Kabel bzw. den unisolierten Leiterabschnitt des Leiters sicher an der Tragschiene halten. Durch diese Mehrfachfunktion ermöglichen sie ebenfalls eine sichere elektrische Verbindung zwischen Tragschiene und Leiter des Kabels. Dies erspart zusätzliche Halte- wie auch Kontaktierungsmittel für das Kabel bzw. dessen Leiter, wodurch wiederum die Teilevielfalt zur Realisierung einer erfindungsgemäßen Anschlussvorrichtung gering gehalten werden kann.

In diesem Zusammenhang ist erfindungsgemäß vorgesehen, dass der Anschlusskörper Kontaktierungsmittel aufweist, die derart eingerichtet und ausgebildet sind, dass beim Aufrasten des Anschlusskörpers auf die Tragschiene die Kontaktierungsmittel, insbesondere selbsttätig, den im Aufnahmeraum angeordneten unisolierten Leiterabschnitt des Leiters mit einer Federkraft beaufschlagen und diesen damit gegen den Anschlusskörper und/oder die Tragschiene drücken, wodurch der Leiterabschnitt unter Wirkung der Federkraft (Federkraftbelastet) in Anlage gebracht ist mit dem Anschlusskörper und/oder der Tragschiene.

Erfindungsgemäß ermöglicht die Federkraft vorteilhafterweise, dass die Sicherheit für die gewünschte elektrische Verbindung zwischen Tragschiene und Leiter des Kabels erhöht ist. Ferner erzeugt die Federkraft eine Haltekraft für den Leiter bzw. das Kabel, durch die ein sicheres Halten des Leiters bzw. Kabels an der Tragschiene erreicht ist.

Zudem ist vorteilhafter Weise erreicht, dass verschiedene Querschnitte des Leiters bzw. Kabels mit einer erfindungsgemäßen Anschlussvorrichtung verwendet werden können, ohne dass es einer gestalterischen Anpassung bedarf. Daher ist eine erfindungsgemäße Anschlussvorrichtung flexibel und für ein breites Anwendungsspektrum von elektrischen Leitern verwendbar.

Eine erfindungsgemäße Anschlussvorrichtung erzeugt mittels der Kontaktierungsmittel eine Federkraft, die dazu dient, den im Aufnahmeraum angeordneten unisolierten Leiterabschnitt des Leiters in Richtung der Tragschiene bzw. in Richtung des Anschlusskörpers zu drücken, um dadurch eine sichere elektrische Verbindung zu erreichen. Die Erfindung sieht dabei vor, dass die elektrische Leitung zwischen Leiter und Tragschiene über den Anschlusskörper und/oder durch direkt elektrischen Kontakt des unisolierten Leiterabschnitts mit der Tragschiene erfolgen kann.

Vorzugsweise wird dazu eine Federkraft erzeugt, die in Richtung der Tragschiene wirkt und damit den im Aufnahmeraum angeordneten unisolierten Leitabschnitt des Leiters in diese Richtung drückt. Dies bewirkt ein Klemmen des unisolierten Leiterabschnitts des Leiters zwischen dem Anschlusskörper und der Tragschiene.

Zur Erhöhung der Sicherheit einer elektrischen Verbindung zwischen dem Leiter des Kabels und der Tragschiene ist es vorgesehen, dass die Kontaktierungsmittel wenigstens eine Kontaktfederzunge aufweisen, die mit dem Anschlusskörper elektrisch leitend verbunden und derart ausgebildet und an diesem angeordnet ist, dass die Kontaktfederzunge, insbesondere selbsttätig, in Raststellung des Anschlusskörpers den unisolierten Leiterabschnitt mit einer Federkraft belastend kontaktiert.

Damit ergibt sich der Vorteil, dass eine elektrische Verbindung zwischen Leiter und Tragschiene wenigstens über die Kontaktfederzunge erreicht ist. Ferner führt die Kontaktfederzunge zu einer erhöhten Vibrationssicherheit einer erfindungsgemäßen Anschlusseinrichtung, so dass bei auftretenden Vibrationen der Leiter des Kabels sicher mit der Tragschiene elektrisch verbunden ist.

Des Weiteren bewirkt die Kontaktfederzunge, dass wenigstens der unisolierte Leiterabschnitt des Leiters in Raststellung mit einer Federkraft belastet und mit der Tragschiene in Anlage gebracht ist, um eine Kontaktierung mit der Tragschiene zu erreichen bzw. zu unterstützen.

Zudem ermöglicht es die Kontaktfederzunge, dass ein sicherer Einsatz auch bei einem allmählich schwindenden Querschnitt eines Leiters bewirkt ist, indem sie durch ihr federndes/elastisches Verformungsvermögen auch eine selbsttätige Anpassung an einen allmählich sich durchbiegenden/verformenden Leiter bewirkt.

Des Weiteren ist eine erfindungsgemäße Anschlussvorrichtung auch im Falle von hochfrequenten Störströmen einsetzbar, die bei einem Potenzialausgleich zu hohen Stromstärken führen können.

Die Kontaktfederzunge kann beispielsweise durch ein Federelement mit dem unisolierten Leiterabschnitt des Leiters in Anlage gebracht sein. Es ist vorgesehen, dass die Kontaktfederzunge an dem Anschlusskörper einstückig angeformt ist, wodurch sie ein Bestandteil des Anschlusskörpers ist und damit für einen geringen Realisierungsaufwand und eine verbesserte Anwendungsergonomie einer erfindungsgemäßen Anschlussvorrichtung beiträgt.

Für die Erzeugung einer Federkraft verfügt die Kontaktfederzunge über ein entsprechendes federndes bzw. elastisches Verformungsvermögen. Dies wird erreicht durch eine elastische Formgebung und/oder wenigstens abschnittsweise Verwendung eines elastischen Materials und/oder ein elastisches bzw. biegeelastisches Halten/Anordnen an dem Anschlusskörper, um ein federn/elastischen Verformen der Kontaktfederzunge zu ermöglichen bzw. zu unterstützen. Neben diesen können auch weitere Möglichkeiten, beispielsweise ein elastisch verformbar ausgebildeter Abschnitt, der Realisierung dienen. Ferner können die Möglichkeiten einzeln wie auch in beliebiger Kombination miteinander ein feder-elastischen Verformen der Kontaktfederzunge bewirken. Die Kontaktfederzunge ist daher elastisch verformbar und entsprechend federnd ausgebildet.

Zur Kontaktierung des Leiters bzw. dessen im Aufnahmeraum angeordneten Leiterabschnitts ist die Kontaktfederzunge gemäß einer weiteren vorteilhaften Weiterbildung der Erfindung derart eingerichtet und ausgebildet, dass sie wenigstens abschnittsweise in den Aufnahmeraum hineinragt, insbesondere von einer in Raststellung der Tragschiene gegenüberliegenden Seite des Anschlusskörpers aus, insbesondere von einem Steg aus, wie dieser im weiteren beschrieben ist.

Damit ist eine einfache Handhabung für das Einbringen des Leiters bzw. dessen unisolierten Leiterabschnitt in den Aufnahmeraum begünstigt.

Für ein sicheres Kontaktieren zwischen Kontaktfederzunge und unisolierten Leiterabschnitt des Leiters ist in einer weiteren vorteilhaften Weiterbildung der Erfindung vorgesehen, dass die Kontaktfederzunge an einem freien Ende einen Kontaktabschnitt aufweist, mit dem sie den im Aufnahmeraum angeordneten unisolierten Leiterabschnitt des Leiters kontaktiert.

Damit ist es möglich, den Leiter mittels eines Abschnitts der Kontaktfederzunge zu kontaktieren, wodurch sich Vorteile in der Herstellung einer erfindungsgemäßen Anschlussvorrichtung ergeben.

Die Kontaktfederzunge verfügt dazu über ein freies Ende, das gegenüber einem weiteren Ende, mit dem sie an den Anschlusskörper gehalten bzw. einstückig angeformt ist, elastisch auslenkbar ist, so dass sie in Raststellung mit einer Federkraft belastend mit dem unisolierten Leiterabschnitt in Anlage gebracht ist. Dies wird insbesondere dadurch erreicht, indem sie in den Aufnahmeraum wenigstens abschnittsweise hineinragt und den darin angerordneten unisolierten Leiterabschnitt kontaktiert.

In einer weiteren vorteilhaften Weiterbildung der Erfindung ist vorgesehen, dass der Aufnahmeraum derart eingerichtet und ausgebildet ist, dass der Aufnahmeraum in der Raststellung in einer Richtung von dem ersten freien Ende der Tragschiene zu dem weiteren bzw. zweiten freien Ende längserstreckt ist. In diesem Zusammenhang durchquert das Kabel bzw. der Leiter insbesondere in dieser Richtung den Aufnahmeraum.

Die freien Enden der Tragschiene ergeben sich quer zur Längserstreckung der Tragschiene. Die Längserstreckungsrichtung der Tragschiene ist dabei die Richtung, in der eine Aneinanderreihung von elektrischen/elektronischen Modulen erfolgt. Die Module sind dabei um Halten an der Tragschiene eingerichtet und ausgebildet und beispielsweise und insbesondere jeweils durch eine Rasteinrichtung bzw. Rastmittel an der Tragschiene gehalten.

Dabei ist die Längserstreckung der Tragschiene quer zur Längserstreckung des Aufnahmeraumes wie auch quer zur Längserstreckung des Kabels gerichtet, die auf ihre geometrische Erstreckung zwischen seinen, insbesondere freien, Enden bzw. Anschlussenden bezogen ist.

Damit entfaltet die Erfindung eine weitere vorteilhafte Wirkung auch für Kabel, die bereits mit ihren Enden an anderer Stelle angeschlossen bzw. fixiert sind und für eine elektrische Verbindung mit der Tragschiene erfindungsgemäß nicht demontiert werden müssen. Damit entfällt durch die Erfindung auch eine Zerteilung des Kabels, um zwischen den Teilen eine Anschlussvorrichtung zur Kontaktierung der Tragschiene vorsehen zu können.

Der Anschlusskörper einer erfindungsgemäßen Anschlussvorrichtung kann auf unterschiedliche Art und Weise ausgebildet sein. Der Einfachheit halber kann dieser wenigstens durch einen ersten Schenkel und einen zu diesem über einen Steg beabstandeten zweiten Schenkel gebildet sein, wobei der Aufnahmeraum zwischen den Schenkeln gebildet ist, wie dies in einer weiteren vorteilhaften Weiterbildung der Erfindung vorgesehen ist.

Dadurch ist es möglich, auf einfache Art und Weise einen Aufnahmeraum bereitzustellen, der den darin angeordneten Leiter bzw. dessen jeweiligen unisolierten Leiterabschnitt insbesondere in Raststellung durch die vorgenannten Schenkel und den sie verbindenden Steg einfasst.

Die Schenkel sind einander gegenüberliegend angeordnet und insbesondere zueinander parallel bzw. im Wesentlichen parallel zueinander ausgerichtet. Der Steg, über den sie vorzugsweise miteinander verbunden sind, ist quer zu den Schenkeln angeordnet.

Der Anschlusskörper weist an einer Seite eine Öffnung auf, durch die wenigstens der unisolierte Leiterabschnitt des Leiters auf einfache Art und Weise in den Aufnahmeraum einbringbar ist, um diesen in Raststellung mit der Tragschiene elektrisch zu verbinden.

Dabei ist die zwischen den Schenkeln gebildete Öffnung des Aufnahmeraums in Raststellung des Anschlusskörpers der Tragschiene zugewandt, sodass der in dem Aufnahmeraum angeordnete unisolierte Leiterabschnitt des Kabels in dessen Umfangsrichtung von dem Anschlusskörper und der Tragschiene umgeben ist.

Damit kann der unisolierte Leiterabschnitt sicher an der Tragschiene gehalten werden. Ein weiterer Vorteil der Erfindung liegt darin, dass eine großflächige Kontaktierung zwischen Tragschiene bzw. Anschlusskörper und dem Leiter für eine sichere elektrische Verbindung ermöglicht ist. Darüber hinaus bewirkt die Erfindung eine gute Zugentlastung für die weiteren Leiter des Kabels, sofern es mehrere Leiter aufweist.

Durch eine erfindungsgemäße Anordnung der Schenkel, bei denen diese einander gegenüberliegend und insbesondere zueinander parallel an dem Steg angeordnet sind, ergibt sich ein Anschlusskörper, der wenigstens abschnittsweise ein offenes Profil, insbesondere mit einem u-förmigen Querschnitt, aufweist, wie dies durch eine weitere vorteilhafte Weiterbildung der Erfindung vorgesehen ist. Ein solcher Anschlusskörper führt zu einer einfachen wie auch kostengünstigen Herstellung. So sind beispielsweise sogenannte Strangpressprofile zur kostengünstigen Herstellung einer erfindungsgemäßen Anschlussvorrichtung verwendbar.

Es ist vorgesehen, dass der Anschlusskörper einstückig, insbesondere durch ein Blechstanzbiegeteil, gebildet ist.

Dies begünstigt eine kostengünstige Herstellung, wobei vorteilhafterweise mit einem Werkzeug auch verschiedene Materialen zur Bildung eines Anschlusskörpers verarbeitet werden können, um damit eine erfindungsgemäße Anschlusseinrichtung für verschiedene Anwendung auf einfache Art und Weise herstellen zu können. Dazu erschließt die Erfindung ebenfalls logistische wie auch Handhabungsvorteile wie auch Vorteile hinsichtlich des Recyclings.

Zudem ist es so auf einfache Art und Weise möglich, eine erfindungsgemäß gebildete Anschlussvorrichtung korrosionsbeständig auszuführen und daher auch für eine Verwendung in aggressive Umgebungen anzupassen. Dazu trägt auch die einstückige Ausgestaltung mit einem Verzicht auf weitere zusätzliche Einzelteile, wie z.B. ein separates Federelement, bei.

Die elektrische Verbindung zwischen dem Leiter und der Tragschiene kann mittels der Erfindung durch direkten Kontakt des Leiters mit der Tragschiene und/oder durch Kontakt mit dem Anschlusskörper erfolgen. Insofern vermag die Erfindung eine erhöhte Sicherheit in der elektrischen Verbindung zu realisieren.

Um elektrische Energie über einen erfindungsgemäßen Anschlusskörper leiten zu können, ist in einer weiteren vorteilhaften Weiterbildung der Erfindung vorgesehen, dass der Anschlusskörper wenigstens abschnittsweise aus einem elektrisch leitenden Material, insbesondere aus einem metallaufweisenden Material, vorzugsweise aus einem Federstahl, besteht oder solches aufweist. Mit der Wahl eines elektrisch leitenden Materials erübrigen sich weitere zusätzliche Hilfsmittel zur Erstellung einer elektrischen Verbindung mit den entsprechenden Vorteilen.

Ein Metall erlaubt die Ausbildung eines Anschlusskörpers mit einer hohen Festigkeit, guten Elastizitätseigenschaften und guter elektrischer Leitfähigkeit. Ein Federstahl ermöglicht überdies ein hohes elastisches Verformungsvermögen und eine Eignung zur Ausbildung federnder Abschnitte, beispielsweise zur Ausbildung von Rastmitteln wie auch Kontaktmitteln.

Erfindungsgemäß ist es vorgesehen, dass die Rastmittel, mit denen der Anschlusskörper in Raststellung an der Tragschiene gehalten ist, wenigstens zwei zueinander beabstandete Rasthaken aufweist, die derart eingerichtet, ausgebildet und an dem Anschlusskörper angeordnet sind, dass ein erster Rasthaken mit dem ersten freien Ende der Tragschiene und ein zweiter Rasthaken mit dem zweiten freien Ende der Tragschiene für ein Aufrasten des Anschlusskörpers auf der Tragschiene zusammenwirken.

Die Erfindung ermöglicht damit, dass der Anschlusskörper durch die Rasthaken einfach in der Handhabung und in der Raststellung sicher an der Tragschiene gehalten ist. Dabei ist der Anschlusskörper an der Tragschiene durch die Rasthaken mittels Kraftschluss bzw. einer Kombination aus Kraft- und Formschluss gehalten. Damit verhindern die Rasthaken vorteilhafterweise ein ungewolltes Abheben des Anschlusskörpers von der Tragschiene und gewähren dadurch neben einem sicheren Halt auch ein sicheres elektrisches Verbinden von Leiter und Tragschiene miteinander.

In Abhängigkeit von dem Profil der Tragschiene können die Rasthaken für ein zuvor beschriebenes Aufrasten mit ihrer jeweiligen Öffnung, die auch als Hakenöffnung bezeichnenbar ist, einander zugewandt wie auch einander abgewandt angeordnet sein.

Bei einer Tragschiene mit Hutprofil ist eine Ausführung einer erfindungsgemäßen Anschlussvorrichtung als bevorzugt vorgesehen, bei der die Rasthaken für ein sicheres Halten an der Tragschiene einander zugewandt sind. Bei einer Tragschiene mit C-Profil bzw. G-Profil ist demgegenüber eine Ausführung einer erfindungsgemäßen Anschlussvorrichtung als bevorzugt vorgesehen, bei der die Rasthaken einander abgewandt sind. Analoges ergibt sich für entsprechend ähnliche Profilformen von Tragschienen.

Um die Sicherheit zum Halten des Anschlusskörpers an der Tragschiene zu erhöhen ist, in einer weiteren vorteilhaften Weiterbildung der Erfindung vorgesehen, dass wenigstens einer der Rasthaken derart eingerichtet und ausgebildet ist, dass dieser in Raststellung mit einer Federkraft belastend gegen die Tragschiene in Anlage gebracht ist und ein Klemmen des Anschlusskörpers an der Tragschiene bewirkt.

Dies kann beispielsweise dadurch erfolgen, dass die Rastmittel wenigstens einen ersten Rastarm aufweisen, an dem der erste Rasthaken derart angeordnet ist, dass der erste Rasthaken und der zweite Rasthaken beim Aufrasten des Anschlusskörpers auf der Tragschiene mit einer Federkraft belastet gegeneinander angestellt sind und derart gegen die zwischen ihnen angeordnete Tragschiene drücken.

Die Erfindung bewirkt durch die vorteilhafte Weiterbildung insbesondere einen Kraftschluss zwischen dem Anschlusskörper bzw. den Rasthaken und der Tragschiene. Damit ermöglicht es die Erfindung in vorteilhafter Weise, dass die Anschlussvorrichtung bzw. der Anschlusskörper an der Tragschiene fest gehalten und insbesondere in ihrer Position an der Tragschiene fixiert ist. Die Erfindung umfasst dabei auch ein kraft- wie auch formschlüssiges Halten an der Tragschiene, wobei damit auch eine Kombination aus Kraft- um Formschuss umfasst ist. Die Erfindung verzichtet auf weitere Hilfsmittel, wie beispielsweise Klebstoffe, um ein sicheres Halten des Anschlusskörpers an der Tragschiene zu erreichen.

Der Anschlusskörper ist in Raststellung durch die zwischen den Rasthaken wirkende Federkraft sowohl längs als auch quer zur Längserstreckungsrichtung der Tragschiene durch einen Kraftschluss gesichert. Insofern ist der Anschlusskörper einer erfindungsgemäßen Anschlussvorrichtung in seiner Lage und Position an der Tragschiene fixiert.

Zur Erzeugung einer Federkraft ist im Rahmen der Erfindung vorzugsweise vorgesehen, auf zusätzliche Federmittel zu verzichten und die Federwirkung insbesondere durch eine angepasste Formgebung zu erreichen. Der vorgenannte Federarm kann dabei vorzugsweise über ein freies elastisch auslenkbares Ende verfügen, an dem der Rasthaken gebildet ist, während der Rastarm mit seinem verbleibenden Ende für ein elastisch federndes Auslenken des freien Endes an dem Anschlusskörper angeordnet und gehalten, insbesondere einstückig angeformt, ist.

Beispielsweise und insbesondere ist der jeweilige Rasthaken dazu eingerichtet und ausgebildet ist, den Anschlusskörper einer erfindungsgemäßen Anschlussvorrichtung in Raststellung derart an der Tragschiene zu halten, dass wenigstens ein Rasthaken einen Tragschienenrand des jeweiligen freien Endes der Tragschiene übergreift.

Dazu ist der Rasthaken beispielsweise und insbesondere auf einfache Art und Weise durch eine Ausnehmung an dem Anschlusskörper gebildet, die wenigstens abschnittsweise komplementär zur Gestaltung des betreffenden Tragschienenendes gestaltet ist, mit dem der Rasthaken zum Aufrasten des Anschlusskörpers auf die Tragschiene bzw. in Raststellung zusammenwirkt.

Dazu ist im Rahmen der Erfindung insbesondere umfasst, dass die Öffnung des Rasthakens dem jeweiligen freien Ende der Tragschiene, mit der der jeweilige Rasthaken zum Aufrasten des Anschlusskörpers auf die Tragschiene zusammenwirken, zugewandt ist.

Für ein sicheres Halten ist in einer weiteren vorteilhaften Weiterbildung der Erfindung vorgesehen, dass wenigstens einer der Rasthaken die Tragschiene an einem freien Ende übergreift, wodurch dieser auch ein an dem freien Ende gebildeter Tragschienenrand übergreift. Vorzugsweise übergreift ein erster Rasthaken ein freies Ende der Tragschiene und ein zweiter Rasthaken ein weiteres freies Ende der Tragschiene, um eine verbessertes Halten und einfaches Anbringen an der Tragschiene zu erzielen.

Eine erfindungsgemäße Anschlussvorrichtung ist durch die Rastmittel zerstörungsfrei von der Tragschiene entfernbar. Um dies auf einfache Art und Weise vornehmen zu können, ist in einer vorteilhaften Weiterbildung der Erfindung vorgesehen, dass die Rastmittel wenigstens ein Betätigungsglied aufweisen, das mit wenigstens einem der Rasthaken derart wirkverbunden ist, dass eine Betätigung des Betätigungsgliedes den Rasthaken des Anschlusskörpers für ein Lösen von der Tragschiene bewegt.

Dies ist beispielsweise und insbesondere dadurch möglich, indem das wenigstens eine Betätigungsglied mit wenigstens einem der Rastarme derart wirkverbunden ist, dass eine Betätigung des Betätigungsgliedes eine Bewegung des wenigstens einen Rasthakens entgegen der zwischen den ersten und zweiten Rasthaken wirkenden Federkraft bewirkt.

Im Rahmen der Erfindung kann ein Betätigungsglied zum Lösen der Haltewirkung auf verschiedene Art und Weise gebildet sein und ist beispielsweise und insbesondere für eine Betätigung des Betätigungsgliedes mittels eines Hilfsmittels vorsehen. Ein derartiges Hilfsmittel kann beispielsweise durch ein Handwerkzeug, wie einen Schraubendreher oder ähnliches, gebildet sein. Damit ergibt sich auch ein Manipulationsschutz gegen ein ungewolltes Betätigen.

Ferner ist es im Rahmen der Erfindung auch möglich, die Betätigungsmittel für eine werkzeugfreie Betätigung auszubilden, beispielsweise mittels eines Betätigungshebels oder dergleichen.

Auf einfache Art und Weise kann ein erleichtertes Lösen unter Einsatz eines Hilfsmittels dadurch erreicht werden, indem das Betätigungsglied eine Kraft zum Lösen der Haltewirkung durch eine Hebelwirkung erzeugt. Dies kann dadurch erreicht werden, dass das Betätigungsglied an dem Rastarm angeordnet ist und bei Betätigung ein Auslenken des Rastarmes entgegen der wirkenden Federkraft bewirkt, um den daran angeordneten Rasthaken von der Tragschiene zu lösen und zu entfernen.

In einer weiteren vorteilhaften Weiterbildung ist vorgesehen, dass die Anschlussvorrichtung zum Anschließen eines Leiters, insbesondere eines Schirmleiters, eines Kabels an eine gemäß DIN EN 60715:2001-09 gestaltete Tragschiene, die insbesondere ein Hutprofil aufweist, eingerichtet und ausgebildet ist. Die zuvor genannte Norm ist im Rahmen der Erfindung verkürzt als DIN EN 60715 bezeichnet und betrifft die Ausgabe der Norm aus dem Jahr 2001 (2001-09).

Tragschienen, die gemäß DIN EN 60715 genormt sind, unterscheiden sich in ihrem jeweiligen Profil bzw. Querschnitt voneinander. Dabei sind durch DIN EN 60715 insbesondere Tragschienen mit einem Hut-, C- oder G-Profil normiert. Vor diesem Hintergrund führt diese vorteilhafte Weiterbildung der Erfindung zu dem Vorteil, dass eine erfindungsgemäße Anschlusseinrichtung mit anderen elektrischen Komponenten auf einer gemeinsamen Tragschiene angeordnet werden kann, ohne dass es besonderer Anpassungen bedarf. Ferner erschließt sich damit ein breites Anwendungsspektrum wie auch eine gesteigerte Sicherheit in der Anwendung bzw. Handhabung.

Die Erfindung umfasst ebenfalls eine Anschlussbaugruppe, die die vorgenannten Merkmale und Vorteile aufgreift. Dazu umfasst sie ein wenigstens einen Leiter aufweisendes Kabel, eine Tragschiene und eine Anschlussvorrichtung, wie sie zuvor mit ihren unterschiedlichen Weiterbildungen beschrieben wurde. Dabei ist die Anschlussvorrichtung zur elektrischen Verbindung des Leiters, insbesondere eines Schirmleiters, des Kabels und der Tragschiene miteinander eingerichtet und ausgebildet.

Die Erfindung wird nachfolgend anhand der beigefügten Zeichnung näher erläutert, in der stellvertretend für eine Vielzahl erfindungsgemäßer Anschlussvorrichtungen ein Ausführungsbeispiel einer erfindungsgemäßen Anschlussvorrichtung gezeigt ist. In den Figuren ist ebenfalls eine Anschlussbaugruppe mit den zuvor genannten Bestandteilen veranschaulicht.

Dabei bilden alle beanspruchten, beschriebenen und in der Zeichnung dargestellten Merkmale für sich genommen sowie in beliebiger Kombination miteinander den Gegenstand der Erfindung, unabhängig von ihrer Zusammenfassung in den Patentansprüchen und deren Rückbezügen sowie unabhängig von ihrer Beschreibung bzw. Darstellung in der Zeichnung. Daher sind die Merkmale nicht an der im Folgenden erläuterten Konstellation gebunden, sondern können auch isoliert voneinander wie auch in einer abweichenden Zusammenstellung eine erfindungsgemäße Anschlusseinrichtung bilden.

Die Figuren der Zeichnung zeigen eine mögliche Ausführungsform einer erfindungsgemäßen Anschlussvorrichtung in jeweils einer schematischen Darstellung.

Die Darstellungen in den Figuren sind daher insbesondere nicht zwingend maßstabsgetreu, so dass auch die in den Figuren jeweils gewählten Maßstäbe zueinander unterschiedlich sein können.

Zur besseren Übersicht sind die Darstellungen auf die das Verständnis unterstützenden Elemente/Bauteile/Bestandteile reduziert.

In den Figuren sind gleiche oder sich entsprechende Bauteile/Bestandteile bzw. Elemente mit den gleichen Bezugszeichen versehen.

Zur besseren Übersicht sind in den Figuren nicht stets alle Elemente/Bauteile/Bestandteile mit Bezugszeichen versehen, wobei sich die Zuordnung durch die gleiche Darstellung bzw. eine der Ansicht angepasste Darstellung ergibt.

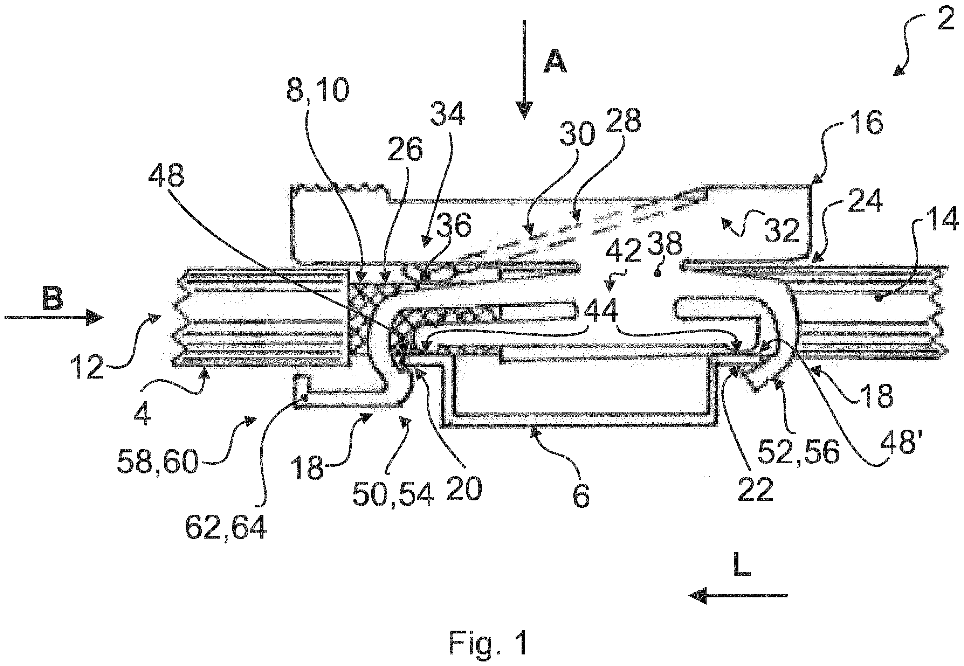

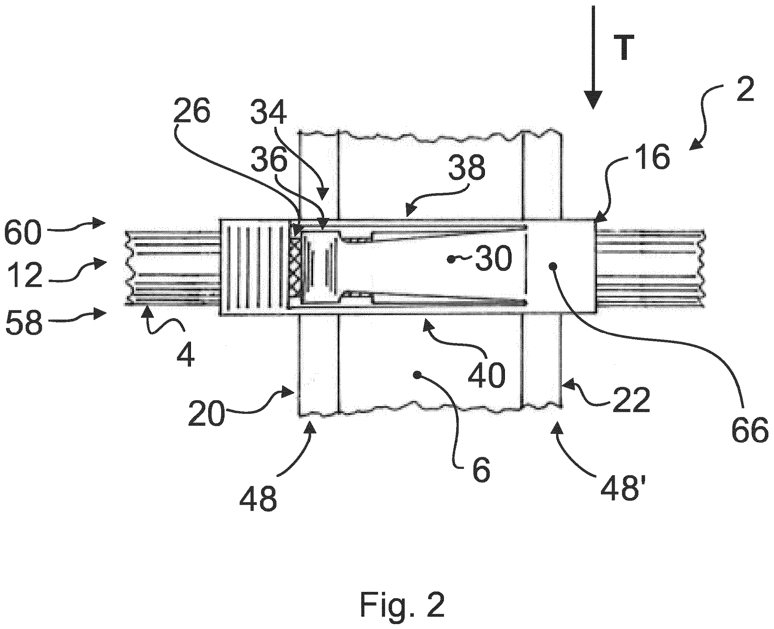

Es zeigt:
Fig. 1
   ein Ausführungsbeispiel einer erfindungsgemäßen Anschlussvorrichtung mit einem daran angeordneten Kabel in einer Seitenansicht in schematischer Darstellungsweise, wobei sich diese in einer Raststellung an einer Tragschiene angeordnet befindet,
Fig. 2
   das Ausführungsbeispiel erfindungsgemäßen Anschlussvorrichtung aus Fig. 1 in einer in Fig. 1 durch A gekennzeichneten Ansicht in schematischer Darstellungsweise und in einem zur Darstellung in Fig. 1 anderen Maßstab,
Fig. 3
   das Ausführungsbeispiel einer erfindungsgemäßen Anschlussvorrichtung aus Fig. 1 in einer in Fig. 1 durch B gekennzeichneten Seitenansicht, wiederum in schematischer Darstellungsweise und in einem anderen Maßstab zur Darstellung in Fig. 1 wie auch Fig. 2.

Die anhand der Figuren veranschaulichten Merkmale gelten auch sinngemäß bzw. analog übergreifend wie auch isoliert voneinander für verschiedene Ausführungsbeispiele wie auch weitere erfindungsgemäß gebildete Anschlussvorrichtungen. Die Erfindung ist daher nicht auf die beschriebenen und gezeigten Ausführungsbeispiele bzw. Zusammenhänge beschränkt.

Fig. 1 zeigt ein Ausführungsbeispiel einer erfindungsgemäßen Anschlussvorrichtung 2 mit einem daran angeordneten Kabel 4 in einer Seitenansicht in schematischer Darstellungsweise, wobei sich diese in einer Raststellung an einer Tragschiene 6 angeordnet befindet.

Im Weiteren wird das anhand der Figuren erläuterte Ausführungsbeispiel einer erfindungsgemäßen Anschlussvorrichtung 2 auch kurz als Anschlussvorrichtung 2 bezeichnet.

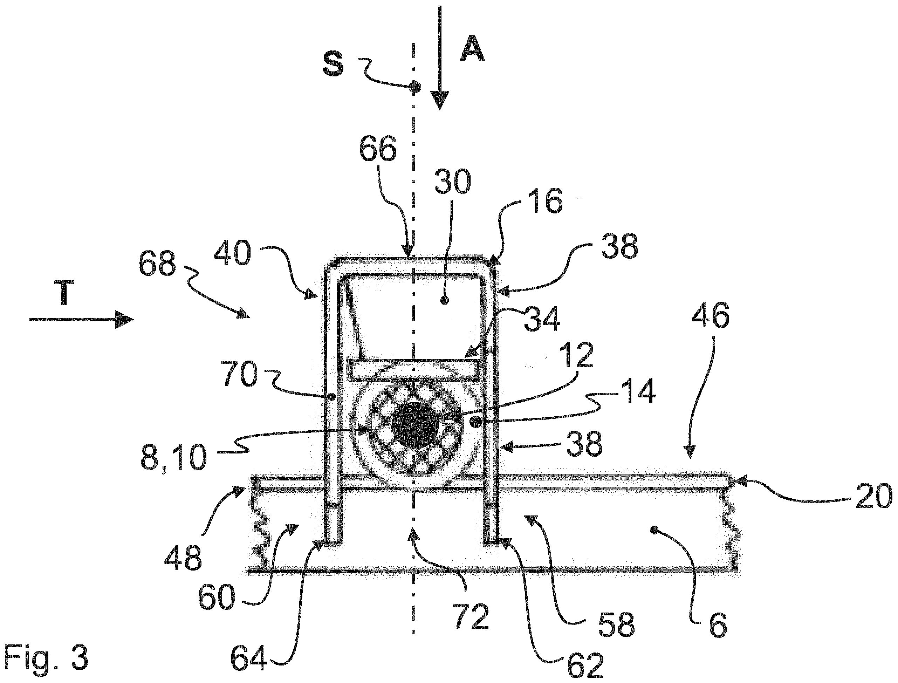

Die Anschlussvorrichtung 2 dient dem Anschließen eines Leiters 8 eines Kabels 4 an eine Tragschiene 6 zu deren elektrischen Verbindung miteinander, wobei in diesem Ausführungsbeispiel der Leiter 8 ein Schirmleiter 10 des Kabels 4 ist, der in seiner Ausführung als Schirmgeflecht einen weiteren Leiter 12 (in Fig. 3 ersichtlich) des Kabels 4 umgibt. Der Schirmleiter 10 und der von diesen umgebene Leiter 12 sind von einer elektrisch isolierenden Schicht 14 ummantelt, die aus einem Isolierstoff gebildet ist und die den Schirmleiter 10 wie auch den weiteren Leiter 12 vor Umgebungseinflüssen schützt.

Zur elektrischen Verbindung des Schirmleiters 10 mit der Tragschiene 6 verfügt die Anschlussvorrichtung 2 über einen Anschlusskörper 16, der zur Anordnung an der Tragschiene 6 Rastmittel 18 aufweist, durch die der Anschlusskörper 16 für ein Aufrasten auf der Tragschiene 6 eingerichtet und ausgebildet ist und damit in der gezeigten Raststellung an einem ersten freien Ende 20 wie auch an einem dem ersten freien Ende 20 gegenüberliegenden zweiten freien Ende 22 der Tragschiene 6 gehalten ist.

Dabei ist der am Anschlusskörper 16 angeordnete Schirmleiter 10 des Kabels 4 mittels der Anschlusseinrichtung 2 an der Tragschiene 6 angeschlossen und elektrisch verbunden.

Wie Fig. 1 zu entnehmen ist, ergeben sich die freien Enden 20,22 anhand des Querschnitts der Tragschiene 6, die in diesem Ausführungsbeispiel mit einem Hut-Profil als sogenannte Hutschiene gemäß DIN EN 60715 ausgeführt ist.

Der Anschlusskörper 16 weist einen Aufnahmeraum 24, der derart eingerichtet und ausbildet ist, dass der in dem Aufnahmeraum 24 aufgenommene unisolierte Leiterabschnitt 26 des Schirmleiters 10 in der gezeigten Raststellung zwischen dem Anschlusskörper 16 und der Tragschiene 6 angeordnet ist. Der Aufnahmeraum 24 ist dabei derart ausgebildet, dass das Kabel 4 in Raststellung des Aufnahmekörpers den Aufnahmeraum 24 durchquert.

Wie in Fig. 1 ersichtlich übergreift der Anschlusskörper 16 die Tragschiene 6 zwischen seinen freien Enden 20,22 und ist dadurch sicher mittels der Rastmittel 18 an der Tragschiene 6 gehalten.

Dabei ist der Aufnahmeraum 24 derart eingerichtet und ausgebildet, dass dieser in Raststellung des Anschlusskörpers 6 in einer Richtung L von dem ersten freien Ende 20 der Tragschiene 6 zu deren zweiten freien Ende 22 der Tragschiene 6 längserstreckt ist.

Der Anschlusskörper 16 ist ausgestattet mit Kontaktierungsmitteln 28, die derart eingerichtet und ausgebildet sind, dass sie beim Aufrasten des Anschlusskörpers 16 auf die Tragschiene 6 selbsttätig den im Aufnahmeraum 24 angeordneten unisolierten Leiterabschnitt 26 des Schirmleiters 10 mit einer Federkraft beaufschlagen und diesen damit in Anlage bringen mit der Tragschiene 6, gegen den die Federkraft den unisolierten Leiterabschnitt 26 drückt.

Überdies weisen die Kontaktierungsmittel 28 eine Kontaktfederzunge 30 auf, die mit dem Anschlusskörper 16 elektrisch leitend verbunden und derart eingerichtet, ausgebildet und an diesem angeordnet ist, dass die Kontaktfederzunge 30 selbsttätig in der gezeigten Raststellung des Anschlusskörpers 16 den unisolierten Leiterabschnitt 26 federkraftbelastend kontaktiert. Die durch die Kontaktierungsmittel 28 erzeugte Federkraft wird bei diesem Ausführungsbeispiel allein durch die Kontaktfederzunge 30 erzeugt.

Dies muss erfindungsgemäß jedoch nicht so sein, so dass die Kontaktierungsmittel 28 weitere Bestandteile umfassen können, die jedoch bei dem gezeigten Ausführungsbeispiel nicht erforderlich sind.

Die Kontaktfederzunge 28 ist an dem Anschlusskörper 16 einstückig angeformt und zudem derart eingerichtet und ausgebildet, dass sie in der Raststellung wenigstens abschnittsweise von einer der Tragschiene 6 gegenüberliegend angeordneten Seite 32 des Anschlusskörpers 16 aus in den Aufnahmeraum 24 hineinragt.

Zur Kontaktierung des im Aufnahmeraum 24 angeordneten unisolierten Leiterabschnitts 26 des Schirmleiters 10 weist die Kontaktfederzunge 30 an einem freien Ende 34 einen Kontaktabschnitt 36 auf. In diesem Ausführungsbeispiel ist der Kontaktabschnitt 36 bogenförmig gestaltet und in Raststellung von der Kontaktfederzunge 30 in Richtung des im Aufnahmeraum 24 angeordneten unisolierten Leiterabschnitts 26 gewölbt geformt.

Der Anschlussköper 16 weist zwei zueinander beabstandete Schenkel 38,40 auf, zwischen denen der Aufnahmeraum 24 gebildet ist. Aufgrund der in Fig. 1 gewählten Ansicht ist nur der erste Schenkel 38 ersichtlich, wobei der zweite Schenkel 40 gleich gestaltet ist zum ersten Schenkel 38. Daher gelten bei dem gezeigten Ausführungsbeispiel die Aussagen für den ersten Schenkel 38 in analoger Weise auch für den zweiten Schenkel 40.

Der Anschlusskörper 16 weist einen Anlagefuß 42 mit daran angeordneten Anlageabschnitten 44 (einheitlich mit dem gleichen Bezugszeichen gekennzeichnet) auf. Der Anlagefuß 42 ist über dessen Anlageabschnitten 44 in Raststellung des Anschlusskörpers 16 in Anlage gebracht mit einer dem Anschlusskörper 16 zugewandten Seite 46 der Tragschiene 6.

Der Anlagefuß 42 ist an beiden Schenkeln 38,40 des Anschlusskörpers 16 ausgebildet, wobei zwei Anlageabschnitte 44 an dem ersten Schenkel 38 und zwei Anlageabschnitte 44 an dem zweiten Schenkel 40 gebildet sind.

Aufgrund der in Fig. 1 gewählten Ansicht ist der Anlagenfuß 42 nur an dem ersten Schenkel 38 ersichtlich und daher an diesem stellvertretend für den weiteren Schenkel 40 erläutert und gezeigt.

Die in diesem Ausführungsbeispiel verwendeten vier Anlageabschnitte 44 dienen neben einem sicheren Halt an der Tragschiene 6 auch einer sicheren elektrischen Kontaktierung zwischen Tragschiene 6 und Anschlusskörper 16, um einen Stromfluss zwischen Tragschiene 6 und unisolierten Leiterabschnitt 26 über den Anlagefuß 42 mit seinen Anlageabschnitten 44 sicher zu ermöglichen.

Dazu sind die Anlagenabschnitte 44 beabstandet zueinander angerordnet, so dass diese in Raststellung die Tragschiene 6 im Bereich der äußeren Tragschienenränder 48,48' kontaktieren.

Der Anlagefuß 42 bildet im Zusammenwirken mit den Rastmitteln 18 ein Widerlager, über das sich der Anschlusskörper 16 in Raststellung an der Tragschiene 6 abstützt und der durch Wirkung der Rastmittel 18 klemmend an der Tragschiene 6 gehalten ist, wie dies im Weiteren noch erläutert wird.

Der Anschlusskörper 16 ist einstückig mittels eines Blechstanzbiegeteils gebildet, so dass dieses Ausführungsbeispiel einer erfindungsgemäßen Anschlusseinrichtung 2 durch lediglich ein Einzelteil, den Anschlusskörper 16, realisiert ist. Somit sind die Bestandteile des Anschlusskörpers 16, wie es z.B. Rastmittel 18, Kontaktierungsmittel 28, Kontaktfederzunge 30, Anlagefuß 42 mit Anlageabschnitten 44 sind, unverlierbar mit diesem verbunden, wodurch sich eine hohe Handhabungssicherheit ergibt.

Zum Aufrasten des Anschlusskörpers 16 auf die Tragschiene 6 verfügen die Rastmittel 18 über vier Rasthaken 50,52,54,56, die paarweise einander zugordnet sind, so dass pro Rasthakenpaar 58,60 jeweils zwei Rasthaken 50,52,54,56 zueinander beabstandet und einander gegenüberliegend angeordnet sind und dadurch jeweils ein erster Rasthaken 50,54 eines jeweiligen Rasthakenpaares 58,60 mit dem ersten freien Ende 20 der Tragschiene 16 und ein zweiter Rasthaken 52,56 eines jeweiligen Rasthakenpaares 58,60 mit dem zweiten freien Ende 22 der Tragschiene 16 für ein Aufrasten des Anschlusskörpers 16 auf die Tragschiene 6 zusammenwirken.

Aufgrund der in Fig. 1 gewählten Ansicht sind die Rasthaken 54,56 des Rasthakenpaares 60 von denen des Rasthakenpaares 58 überdeckt.

Die Rasthaken 50,52,54,56 sind elastisch verformbar an dem Anschlusskörper 16 einstückig angeformt, so dass sie in Raststellung mit einer Federkraft belastend gegen die Tragschiene 6 in Anlage gebracht sind und auf diese drücken, wodurch sie ein Klemmen zum Halten des Anschlusskörpers 16 an der Tragschiene 6 bewirken.

Dazu übergreifen die Rasthaken 50,52,54,56 die Tragschiene 6 in Aufrastrichtung A, in der der Anschlusskörper auf die Tragschiene aufrastet, jeweils an dem freien Ende 20,22 der Tragschiene 6, an dem sie angeordnet sind. Somit übergreift ein Rasthaken 50,52,54,56 auch den an dem jeweiligen freien Ende 20,22 gebildeten Tragschienenrand 48,48'.

Ferner weisen die Rastmittel 18 Betätigungsglieder 62,64 auf, wobei jeweils ein Betätigungsglied 62,64 einem Rasthaken 50,54 eines der Rasthakenpaare 58,60 zugeordnet ist und mit diesem derart wirkverbunden ist, dass eine Betätigung des betreffenden Betätigungsgliedes 62,64 den jeweiligen Rasthaken 50,54 für ein Lösen des Anschlusskörpers 16 von der Tragschiene 6 bewegt.

Bei diesem Ausführungsbeispiel ist der Anlagefuß 42 zwischen den jeweiligen ersten Rasthaken 50, 54 und zweiten Rasthaken 52,56 der Rasthakenpaare 58,60 erstreckt, worauf die Erfindung jedoch nicht beschränkt ist.

Fig. 2 verdeutlich die Anschlusseinrichtung 2 mit dem daran angeordneten Kabel 4 in einer in Fig. 1 durch A gekennzeichnete Ansicht. Darin ersichtlich ist die ebenfalls die Längserstreckungsrichtung T der Tragschiene 6 veranschaulicht, in dessen Richtung ein Aneinanderreihung der für ein Aufrasten ausgebildeter elektrischer/elektronischer Module bzw. Komponente (nicht gezeigt) erfolgt, die dazu entsprechend auf die Tragschiene 6 aufgerastet werden. Dabei können auch erfindungsgemäße Anschlusseinrichtungen 2 (oder andere Anschlusseinrichtungen) in Längserstreckungsrichtung T der Tragschiene 6 aneinander angereiht werden.

Quer zur Längserstreckungsrichtung T der Tragschiene 6 ist der Aufnahmeraum 24 längserstreckt, wobei bei diesem Ausführungsbeispiel in der gezeigten Raststellung des Anschlusskörpers 6 das Kabel 4 den Aufnahmeraum 24 durchquert.

Ebenfalls quer zur Längserstreckungsrichtung T sind auch die freien Enden 20,22 der Tragschiene 6 zueinander beabstandet, die sich am verwendeten Profil 68 der Tragschiene 6 ergeben.

Fig. 3 verdeutlicht, dass der erste Schenkel 38 und der zu diesem beabstandete zweite Schenkel 40 des Anschlusskörpers 16 in gleicher Richtung A von einem sie verbindenden und zueinander beabstandenden Steg 66 des Anschlusskörpers 16 abgewinkelt bzw. abgebogen sind, wobei der Aufnahmeraum 24 zwischen den Schenkeln 38,40 gebildet ist.

Die Schenkeln 38,40 sind einander gegenüberliegend angeordnet und parallel zueinander ausgerichtet. Die Schenkel 38,40 bilden auf diese Weise zusammen mit dem Steg 66, der sie zueinander beabstandet, ein offenes Profil 68 mit einem u-förmigen Querschnitt 70 aus.

Das offene Profil 68 ist mit einer Öffnung 72 in Raststellung zur Tragschiene 6 hin geöffnet, wodurch der unisolierte Leiterabschnitt 26 über die Öffnung 72 einfach in dem Aufnahmeraum 24 anordnenbar ist. Damit ist es möglich, das Kabel 4 wahlfrei zunächst an dem Anschlusskörper 16 oder an der Tragschiene 6 anzuordnen, um daraufhin den Anschlusskörper 16 auf die Tragschiene 6 aufzurasten und in die gezeigte Raststellung zu bringen. Damit ist es ebenfalls möglich, einen Leiter 8/Schirmleiter 10 (wie auch mehrere) eines bereits installierten Kabels 4 mittels des Anschlusskörpers 16 mit der Tragschiene 6 elektrisch zu verbinden, ohne eine Demontage des Kabels 4 vornehmen zu müssen.

Fig. 3 verdeutlich ebenfalls, dass die Kontaktfederzunge 28 vom Steg 66 aus in den Aufnahmeraum 24 hineinragt.

Des Weiteren ist erkennbar, dass der Anschlusskörper 16 zu einer Symmetrieebene S symmetrisch bzw.im Wesentlichen symmetrisch gestaltet ist, wodurch insbesondere dessen erster und zweiter Schenkel zueinander gleich gestaltet sind.

### Bezugszeichenliste

- 2: Anschlussvorrichtung
- 4: Kabel
- 6: Tragschiene
- 8: Leiter
- 10: Schirmleiter
- 12: weiterer Leiter
- 14: isolierende Schicht
- 16: Anschlusskörper
- 18: Rastmittel
- 20: erstes freies Ende der Tragschiene 6
- 22: zweites freies Ende der Tragschiene 6
- 24: Aufnahmeraum
- 26: unisolierter Leiterabschnitt 24 des Leiters 8 /Schirmleiters 10
- 28: Kontaktierungsmittel
- 30: Kontaktfederzunge
- 32: Seite d. Anschlusskörpers 16, in Raststellung d. Tragschiene 6 gegenüberliegend
- 34: freies Ende der Kontaktfederzunge 30
- 36: Kontaktabschnitt der Kontaktfederzunge 30
- 38: erster Schenkel des Anschlusskörpers 16
- 40: zweiter Schenkel des Anschlusskörpers 16
- 42: Anlagefuß
- 44: Anlageabschnitte des Anlagefußes 42
- 46: Seite der Tragschiene 6, die dem Anschlusskörper 16 in Raststellung zugewandt ist
- 48,48': Tragschienenrand
- 50,52: erster Rasthaken
- 54,56: zweiter Rasthaken
- 58: Rasthakenpaar mit Rasthaken 50,52
- 60: Rasthakenpaar mit Rasthaken 54,56
- 62: Betätigungsglied
- 64: Betätigungsglied
- 66: Steg des Anschlusskörpers 16
- 68: Profil des Anschlusskörpers 16
- 70: u-förmiger Querschnitt
- 72: Öffnung des Profils 52
- A: Aufrastrichtung
- T: Längserstreckungsrichtung der Tragschiene 6
- L: Richtung von dem ersten freien Ende 20 der Tragschiene 6 zu deren zweiten freien Ende 22
- S: Symmetrieebene

## Patentansprüche

1. Anschlussvorrichtung (2) zum Anschließen eines Leiters (8), insbesondere eines Schirmleiters (10), eines Kabels (4) an eine Tragschiene (6) zu deren elektrischen Verbindung miteinander,
mit einem Anschlusskörper (16), der zur Anordnung an der Tragschiene (6) Rastmittel (18) aufweist,
durch die der Anschlusskörper (16) auf der Tragschiene (6) aufrastet und in Raststellung wenigstens an einem ersten freien Ende (20) wie auch an einem dem ersten freien Ende (20) gegenüberliegenden zweiten freien Ende (22) der Tragschiene (6) gehalten ist
und dabei den am Anschlusskörper (16) angeordneten Leiter (8) des Kabels (4) elektrisch mit der Tragschiene (6) verbindet,
wobei der Anschlusskörper (16) einen Aufnahmeraum (24) aufweist, der derart eingerichtet und ausbildet ist, dass wenigstens ein in dem Aufnahmeraum (24) aufgenommener unisolierter Leiterabschnitt (26) des Leiters (8) in Raststellung zwischen dem Anschlusskörper (16) und der Tragschiene (6) angeordnet ist,
wobei der Anschlusskörper (16) Kontaktierungsmittel (28) aufweist, die derart eingerichtet und ausgebildet sind, dass die Kontaktierungsmittel (28) beim Aufrasten des Anschlusskörpers (16) auf die Tragschiene (6) den im Aufnahmeraum (24) angeordneten unisolierten Leiterabschnitt (26) des Leiters (8) mit einer Federkraft beaufschlagen und diesen damit gegen den Anschlusskörper (16) und/oder die Tragschiene (6) drücken,
**dadurch gekennzeichnet, dass**
die Rastmittel (18) wenigstens zwei zueinander beabstandete und an dem Anschlusskörper (16) einstückig angeformte Rasthaken (50,52,54,56) aufweisen, die derart eingerichtet, ausgebildet und an dem Anschlusskörper (16) angeordnet sind, dass ein erster Rasthaken (50,54) mit dem ersten freien Ende (20) der Tragschiene (6) und ein zweiter Rasthaken (52,56) mit dem zweiten freien Ende (22) der Tragschiene (6) für ein Aufrasten des Anschlusskörpers (16) auf die Tragschiene (6) zusammenwirken, und
**dass** die Kontaktierungsmittel (28) wenigstens eine Kontaktfederzunge (30) aufweisen, die mit dem Anschlusskörper (16) elektrisch leitend verbunden und derart ausgebildet und an diesem angeordnet ist, dass die Kontaktfederzunge (30) in Raststellung des Anschlusskörpers (16) den unisolierten Leiterabschnitt (26) federkraftbelastend kontaktiert, wobei der Anschlusskörper (16) einstückig gebildet ist und wobei die Kontaktfederzunge (30) an dem Anschlusskörper (16) einstückig angeformt ist.

2. Anschlussvorrichtung (2) nach Anspruch 1, **dadurch gekennzeichnet, dass** die Kontaktfederzunge (30) derart eingerichtet und ausgebildet ist, dass sie wenigstens abschnittsweise in den Aufnahmeraum (24) hineinragt.

3. Anschlussvorrichtung (2) nach Anspruch 1 oder 2, **dadurch gekennzeichnet, dass** die Kontaktfederzunge (30) an einem freien Ende wenigstens einen Kontaktabschnitt aufweist, mit dem sie den im Aufnahmeraum (24) angeordneten unisolierten Leiterabschnitt (26) des Leiters (8) kontaktiert.

4. Anschlussvorrichtung (2) nach einem der vorhergehenden Ansprüche, **dadurch gekennzeichnet, dass** der Aufnahmeraum (24) derart eingerichtet und ausgebildet ist, dass dieser in Raststellung des Anschlusskörpers (16) in einer Richtung (L) von dem ersten freien Ende (20) zu dem zweiten freien Ende (22) der Tragschiene (6) längserstreckt ist.

5. Anschlussvorrichtung (2) nach einem der vorhergehenden Ansprüche, **dadurch gekennzeichnet, dass** der Anschlusskörper (16) wenigstens einen ersten Schenkel (38) und einen zu diesem über einen Steg (66) beabstandeten zweiten Schenkel (40) aufweist, wobei der Aufnahmeraum (24) zwischen den Schenkeln (38,40) gebildet ist.

6. Anschlussvorrichtung (2) nach Anspruch 5, **dadurch gekennzeichnet, dass** der Anschlusskörper (16) wenigstens abschnittsweise ein offenes Profil (68), insbesondere mit einem u-förmigen Querschnitt (70), aufweist.

7. Anschlussvorrichtung (2) nach einem der vorhergehenden Ansprüche, **dadurch gekennzeichnet, dass** der Anschlusskörper (16) wenigstens abschnittsweise aus einem elektrisch leitenden Material, insbesondere aus einem metallaufweisenden Material, vorzugsweise aus einem Federstahl, besteht oder solches aufweist.

8. Anschlussvorrichtung (2) nach einem der vorhergehenden Ansprüche, **dadurch gekennzeichnet, dass** wenigstens einer der Rasthaken (50,52,54,56) derart eingerichtet und ausgebildet ist, dass dieser in Raststellung mit einer Federkraft belastend gegen die Tragschiene (6) in Anlage gebracht ist und ein Klemmen des Anschlusskörpers (16) an der Tragschiene (6) bewirkt.

9. Anschlussvorrichtung (2) nach einem der Ansprüche 1 bis 7, **dadurch gekennzeichnet, dass** wenigstens einer der Rasthaken (50,52,54,56) die Tragschiene (6) an einem freien Ende (20,22) übergreift.

10. Anschlussvorrichtung (2) nach einem der Ansprüche 1 bis 9, **dadurch gekennzeichnet, dass** die Rastmittel (18) wenigstens ein Betätigungsglied (62,64) aufweisen, das mit wenigstens einem der Rasthaken (50,54) derart wirkverbunden ist, dass eine Betätigung des Betätigungsgliedes (62,64) den Rasthaken (50,54) des Anschlusskörpers (16) für ein Lösen von der Tragschiene (6) bewegt.

11. Anschlussvorrichtung (2) nach einem der vorhergehenden Ansprüche, **dadurch gekennzeichnet, dass** die Anschlussvorrichtung (2) zum Anschließen eines Leiters (8), insbesondere eines Schirmleiters (10), eines Kabels (4) an eine gemäß DIN EN 60715 gestaltete Tragschiene (6), die insbesondere ein Hutprofil aufweist, eingerichtet und ausgebildet ist.

12. Anschlussbaugruppe mit einem wenigstens einen Leiter (8) aufweisenden Kabel (4), einer Tragschiene (6) und einer Anschlussvorrichtung (2) nach einen der vorangehenden Ansprüche, die zur elektrischen Verbindung des Leiters (8), insbesondere eines Schirmleiters (10), des Kabels (4) und der Tragschiene (6) miteinander eingerichtet und ausgebildet ist.

## Claims

1. Connection device (2) for connecting a conductor (8), in particular a screen conductor (10), of a cable (4) to a support rail (6) for their electrical connection to each other,
having a connecting element (16) which, to be arranged on the support rail (6), has latching means (18),
by means of which the connecting element (16) latches on the support rail (6) and, in the latching position, is held on at least a first free and (20) and also on a second free end (22), opposite to the first free end (20), of the support rail (6),
and, in the process, connects the conductor (8) of the cable (4) arranged on the connecting element (16) electrically to the support rail (6),
wherein the connecting element (16) has a receiving space (24), which is configured and designed in such a way that, in the latching position, at least one uninsulated conductor section (26) of the conductor (8) that is received in the receiving space (24) is arranged between the connecting element (16) and the support rail (6),
wherein the connecting element (16) has contacting means (28), which are configured and designed in such a way that when the connecting element (16) is latched onto the support rail (6), the contacting means (28) apply a spring force to the uninsulated conductor section (26) of the conductor (8) that is arranged in the receiving space (24) and therefore press the conductor against the connecting element (16) and/or the support rail (6),
**characterized in that**
the latching means (18) have at least two latching hooks (50, 52, 54, 56) which are spaced apart from each other and moulded in one piece on the connecting element (16) and which are configured, designed and arranged on the connecting element (16) in such a way that a first latching hook (50, 54) interacts with the first free end (20) of the support rail (6) and a second latching hook (52, 56) interacts with the second free end (22) of the support rail (6) to latch the connecting element (16) onto the support rail (6), and
**in that** the contacting means (28) have at least one contact spring tongue (30), which is electrically conductively connected to the connecting element (16) and is designed and arranged on the latter in such a way that, in the latching position of the connecting element (16), the contact spring tongue (30) contacts the uninsulated conductor section (26) under spring force, wherein the connecting element (16) is formed in one piece and wherein the contact spring tongue (30) is moulded in one piece on the connecting element (16).

2. Connection device (2) according to Claim 1, **characterized in that** the contact spring tongue (30) is configured and designed in such a way that it projects into the receiving space (24), at least in some sections.

3. Connection device (2) according to Claim 1 or 2, **characterized in that**, at one free end, the contact spring tongue (30) has at least one contact section with which it contacts the uninsulated conductor section (26) of the conductor (8) arranged in the receiving space (24) .

4. Connection device (2) according to one of the preceding claims, **characterized in that** the receiving space (24) is configured and designed in such a way that, in the latching position of the connecting element (16), it extends longitudinally in a direction (L) from the first free end (20) to the second free end (22) of the support rail (6).

5. Connection device (2) according to one of the preceding claims, **characterized in that** the connecting element (16) has at least one first leg (38) and a second leg (40) spaced apart from the latter via a web (66), wherein the receiving space (24) is formed between the legs (38, 40).

6. Connection device (2) according to Claim 5, **characterized in that**, at least in some sections, the connecting element (16) has an open profile (68), in particular with a U-shaped cross section (70).

7. Connection device (2) according to one of the preceding claims, **characterized in that**, at least in some sections, the connecting element (16) consists of an electrically conductive material, in particular of a material having metal, preferably of spring steel, or includes such a material.

8. Connection device (2) according to one of the preceding claims, **characterized in that** at least one of the latching hooks (50, 52, 54, 56) is configured and designed in such a way that, in the latching position, this is brought into contact with the support rail (6) under spring force and causes the connecting element (16) to be clamped to the support rail (6).

9. Connection device (2) according to one of Claims 1 to 7, **characterized in that** at least one of the latching hooks (50, 52, 54, 56) engages over the support rail (6) at a free end (20, 22).

10. Connection device (2) according to one of Claims 1 to 9, **characterized in that** the latching means (18) have at least one actuating member (62, 64), which is operatively connected to at least one of the latching hooks (50, 54) in such a way that an actuation of the actuating member (62, 64) moves the latching hook (50, 54) of the connecting element (16) to release it from the support rail (6).

11. Connection device (2) according to one of the preceding claims, **characterized in that** the connection device (2) is configured and designed to connect a conductor (8), in particular a screen conductor (10), of a cable (4) to a support rail (6) which is configured according to DIN EN 60715 and in particular has a top hat profile.

12. Connection assembly comprising a cable (4) having at least one conductor (8), a support rail (6) and a connection device (2) according to one of the preceding claims, which is configured and designed for the electrical connection of the conductor (8), in particular a screen conductor (10), of the cable (4) and the support rail (6) to each other.

## Revendications

1. Dispositif de raccordement (2) servant au raccordement d'un conducteur (8), en particulier d'un conducteur blindé (10), d'un câble (4) à un profilé-support (6) pour leur connexion électrique l'un à l'autre,
comprenant un corps de raccordement (16) qui présente des moyens d'encliquetage (18) pour l'agencement sur le profilé-support (6),
moyens d'encliquetage par le biais desquels le corps de raccordement (16) est encliqueté sur le profilé-support (6) et est retenu dans la position d'encliquetage au moins à une première extrémité libre (20) tout comme à une deuxième extrémité libre (22) opposée à la première extrémité libre (20) du profilé-support (6),
et connecte en l'occurrence électriquement le conducteur (8), agencé sur le corps de raccordement (16), du câble (4) au profilé-support (6),
le corps de raccordement (16) présentant un espace de logement (24) qui est conçu et réalisé de telle sorte qu'au moins une partie de conducteur (26) non isolée, logée dans l'espace de logement (24), du conducteur (8) soit agencée entre le corps de raccordement (16) et le profilé-support (6) dans la position d'encliquetage,
le corps de raccordement (16) présentant des moyens de mise en contact (28) qui sont conçus et réalisés de telle sorte que les moyens de mise en contact (28), lors de l'encliquetage du corps de raccordement (16) sur le profilé-support (6), sollicitent la partie de conducteur (26) non isolée, agencée dans l'espace de logement (24), du conducteur (8) avec une force élastique et pressent donc celle-ci contre le corps de raccordement (16) et/ou le profilé-support (6),
**caractérisé en ce que**
les moyens d'encliquetage (18) présentent au moins deux crochet d'encliquetage (50, 52, 54, 56) espacés l'un de l'autre et formés d'une seule pièce sur le corps de raccordement (16), lesquels crochets d'encliquetage sont conçus, réalisés et agencés sur le corps de raccordement (16) de telle sorte qu'un premier crochet d'encliquetage (50, 54) coopère avec la première extrémité libre (20) du profilé-support (6) et qu'un deuxième crochet d'encliquetage (52, 56) coopère avec la deuxième extrémité libre (22) du profilé-support (6) pour un encliquetage du corps de raccordement (16) sur le profilé-support (6), et
**en ce que** les moyens de mise en contact (28) présentent au moins une languette élastique de contact (30) qui est connectée de manière électroconductrice au corps de raccordement (16) et est réalisée et agencée sur celui-ci de telle sorte que la languette élastique de contact (30), dans la position d'encliquetage du corps de raccordement (16), vient en contact avec la partie de conducteur (26) non isolée de manière à la solliciter avec une force élastique, le corps de raccordement (16) étant formé d'une seule pièce et la languette élastique de contact (30) étant façonnée d'une seule pièce sur le corps de raccordement (16).

2. Dispositif de raccordement (2) selon la revendication 1, **caractérisé en ce que** la languette élastique de contact (30) est conçue et réalisée de telle sorte qu'elle pénètre au moins dans certaines parties dans l'espace de logement (24).

3. Dispositif de raccordement (2) selon la revendication 1 ou 2, **caractérisé en ce que** la languette élastique de contact (30) présente, à une extrémité libre, au moins une partie de contact par laquelle elle vient en contact avec la partie de conducteur (26) non isolée, agencée dans l'espace de logement (24), du conducteur (8).

4. Dispositif de raccordement (2) selon l'une des revendications précédentes, **caractérisé en ce que** l'espace de logement (24) est conçu et réalisé de telle sorte que celui-ci, dans la position d'encliquetage du corps de raccordement (16), est allongé longitudinalement dans une direction (L) allant de la première extrémité libre (20) à la deuxième extrémité libre (22) du profilé-support (6).

5. Dispositif de raccordement (2) selon l'une des revendications précédentes, **caractérisé en ce que** le corps de raccordement (16) présente au moins une première branche (38) et une deuxième branche (40) espacée de celle-ci par le biais d'un élément jointif (66), l'espace de logement (24) étant formé entre les branches (38, 40).

6. Dispositif de raccordement (2) selon la revendication 5, **caractérisé en ce que** le corps de raccordement (16) présente au moins dans certaines parties un profilé ouvert (68), en particulier avec une section transversale (70) en forme de U.

7. Dispositif de raccordement (2) selon l'une des revendications précédentes, **caractérisé en ce que** le corps de raccordement (16) est constitué au moins dans certaines parties d'un matériau électroconducteur, en particulier d'un matériau présentant un métal, de préférence d'un acier à ressorts, ou présente un tel matériau.

8. Dispositif de raccordement (2) selon l'une des revendications précédentes, **caractérisé en ce qu'**au moins l'un des crochets d'encliquetage (50, 52, 54, 56) est conçu et réalisé de telle sorte que celui-ci, dans la position d'encliquetage, est amené en appui contre le profilé-support (6) de manière à exercer une sollicitation avec une force élastique et provoque un serrage du corps de raccordement (16) sur le profilé-support (6).

9. Dispositif de raccordement (2) selon l'une des revendications 1 à 7, **caractérisé en ce qu'**au moins l'un des crochets d'encliquetage (50, 52, 54, 56) vient en prise par le dessus avec le profilé-support (6) à une extrémité libre (20, 22).

10. Dispositif de raccordement (2) selon l'une des revendications 1 à 9, **caractérisé en ce que** les moyens d'encliquetage (18) présentent au moins un organe d'actionnement (62, 64) qui est relié fonctionnellement à au moins l'un des crochets d'encliquetage (50, 54) de telle sorte qu'un actionnement de l'organe d'actionnement (62, 64) déplace le crochet d'encliquetage (50, 54) du corps de raccordement (16) pour un détachement du profilé-support (6).

11. Dispositif de raccordement (2) selon l'une des revendications précédentes, **caractérisé en ce que** le dispositif de raccordement (2) est conçu et réalisé pour le raccordement d'un conducteur (8), en particulier d'un conducteur blindé (10), d'un câble (4) à un profilé-support (6) configuré selon DIN EN 60715, qui présente en particulier un profilé chapeau.

12. Module de raccordement comprenant un câble (4) présentant au moins un conducteur (8), un profilé-support (6) et un dispositif de raccordement (2) selon l'une des revendications précédentes, qui est conçu et réalisé pour la connexion électrique du conducteur (8), en particulier d'un conducteur blindé (10), du câble (4) et du profilé-support (6) l'un à l'autre.
